# EUROPEAN PATENT APPLICATION

(11) **EP 4 410 554 A1**
(43) Date of publication of application: **07.08.2024**
(21) Application number: 22875538.5
(22) Date of filing: 08.07.2022
(51) Int. Cl.: B41J 2/01, C09D 11/30, B41M 5/00

(54) **ULTRAVIOLET-CURABLE INK COMPOSITION FOR INK-JET PRINTING**

(30) Priority: 29.09.2021 JP 2021159459
(71) Applicant: Sakata INX Corporation, Osaka-shi, Osaka 550-0002 (JP)
(72) Inventor: NAKASHIMA, Okinori, Osaka-shi Osaka 550-0002 (JP); MYOSE, Takuya, Osaka-shi Osaka 550-0002 (JP); FUKE, Kazuhiro, Osaka-shi Osaka 550-0002 (JP)
(74) Representative: Bryn Aarflot AS
(86) International application number: PCT/JP2022/027157
(87) International publication number: WO 2023/053660

(57) **Abstract**

Provided is an ink composition for ultraviolet-curable inkjet printing comprising polymerization components, a resin component, and a photopolymerization initiator, wherein the polymerization components include (A) a polyfunctional amine-modified oligomer, (B) a nitrogen-containing monomer, (C) an aromatic ring-containing monomer, and (D) a polyfunctional monomer, wherein the resin component includes a hydroxyl group-containing resin, wherein (A) comprises an acrylated amine compound having two photopolymerizable functional groups and two amino groups in a molecule, wherein (B) comprises vinyl caprolactam, wherein (C) comprises benzyl acrylate and phenoxyethyl acrylate, wherein (D) comprises at least one of propoxylated neopentyl glycol diacrylate, dipropylene glycol diacrylate, or 1,6-hexanediol diacrylate, wherein a content of (A) is 0.1 to 13.0% by mass, wherein a content of (C) is 35.0 to 75.0% by mass, wherein a content of (D) is 2.0 to 16.0% by mass, and wherein the hydroxyl group-containing resin includes a ketone resin having a hydroxyl group.

## Description

### TECHNICAL FIELD

The present invention relates to an ink composition for ultraviolet-curable inkjet printing. More specifically, the present invention relates to an ink composition for ultraviolet-curable inkjet printing that has an excellent adhesiveness to a plastic base material and can form a coating film having flexibility, water resistance, and waterproof property.

### BACKGROUND ART

Conventionally, an ultraviolet-curable ink has been used in fields such as inkjet printing because it dries quickly, does not contain volatile solvents, and can be printed on various base materials (for example, Patent Document 1). Inkjet printing has been applied to a variety of fields from normal printing to special printing because it can create an image easily and inexpensively. Moreover, an ink composition for inkjet printing has been required which can be printed on various base materials that are stretched or bent after typing and is excellent in coating film property to be obtained (for example, water resistance and waterproof property).

### PRIOR ART DOCUMENT

### Patent Document

Patent Document 1: WO 2010/143738

### SUMMARY OF THE INVENTION

When the ink composition described in Patent Document 1 forms a coating film on a plastic base material (e.g., acryl, polycarbonate, or polystyrene), there is room for improvement in adhesiveness of the coating film. Moreover, the ink composition described in Patent Document 1 has room for improvement in terms of flexibility, water resistance, and waterproof property of a coating film to be obtained.

The present invention has been made in view of such conventional problems, and it is an object of the present invention to provide an ink composition for ultraviolet-curable inkjet printing that has an excellent adhesiveness to a plastic base material and can form a coating film having flexibility, water resistance, and waterproof property.

As a result of intensive studies for solving the above-described problems, the present inventors have found that the above-described problems can be solved simultaneously by adopting certain polyfunctional amine-modified oligomer, nitrogen-containing monomer, aromatic ring-containing monomer, and polyfunctional monomer, as polymerization components, and adopting a certain hydroxyl group-containing resin as a resin component, and completed the present invention.

The ink composition for ultraviolet-curable inkjet printing according to one embodiment of the present invention that solves the above-described problems comprises polymerization components, a resin component, and a photopolymerization initiator, wherein the polymerization components include (A) a polyfunctional amine-modified oligomer, (B) a nitrogen-containing monomer, (C) an aromatic ring-containing monomer, and (D) a polyfunctional monomer, wherein the resin component includes a hydroxyl group-containing resin, wherein (A) the polyfunctional amine-modified oligomer comprises an acrylated amine compound having two photopolymerizable functional groups and two amino groups in a molecule, wherein (B) the nitrogen-containing monomer comprises vinyl caprolactam, wherein (C) the aromatic ring-containing monomer comprises benzyl acrylate and phenoxyethyl acrylate, wherein (D) the polyfunctional monomer comprises at least one of propoxylated neopentyl glycol diacrylate, dipropylene glycol diacrylate, or 1,6-hexanediol diacrylate, wherein a content of (A) the polyfunctional amine-modified oligomer is 0.1 to 13.0% by mass, wherein a content of (C) the aromatic ring-containing monomer is 35.0 to 75.0% by mass, wherein a content of (D) the polyfunctional monomer is 2.0 to 16.0% by mass, and wherein the hydroxyl group-containing resin includes a ketone resin having a hydroxyl group.

### EMBODIMENT FOR CARRYING OUT THE INVENTION

### <Ink composition for ultraviolet-curable inkjet printing>

The ink composition for ultraviolet-curable inkjet printing according to one embodiment of the present invention (hereinafter also referred to as the ink composition) comprises polymerization components, a resin component, and a photopolymerization initiator. The polymerization components include (A) a polyfunctional amine-modified oligomer, (B) a nitrogen-containing monomer, (C) an aromatic ring-containing monomer, and (D) a polyfunctional monomer. The resin component includes a hydroxyl group-containing resin. (A) The polyfunctional amine-modified oligomer comprises an acrylated amine compound having two photopolymerizable functional groups and two amino groups in a molecule. (B) The nitrogen-containing monomer comprises vinyl caprolactam. (C) The aromatic ring-containing monomer comprises benzyl acrylate and phenoxyethyl acrylate. (D) The polyfunctional monomer comprises at least one of propoxylated neopentyl glycol diacrylate, dipropylene glycol diacrylate, or 1,6-hexanediol diacrylate. A content of (A) the polyfunctional amine-modified oligomer is 0.1 to 13.0% by mass. A content of (C) the aromatic ring-containing monomer is 35.0 to 75.0% by mass. A content of (D) the polyfunctional monomer is 2.0 to 16.0% by mass. The hydroxyl group-containing resin includes a ketone resin having a hydroxyl group. Each component will be described below.

### ((A) Polyfunctional amine-modified oligomer)

(A) The polyfunctional amine-modified oligomer is contained as a polymerization component and comprises an acrylated amine compound having two photopolymerizable functional groups and two amino groups in a molecule.

The acrylated amine compound having two photopolymerizable functional groups and two amino groups in the molecule is not particularly limited. By way of an example, examples of the photopolymerizable functional group in the acrylated amine compound include a functional group which may undergo polymerization reaction with visible light or invisible light including ionizing radiation such as ultraviolet rays and electron beams to form a cross-linking bond between molecules. Moreover, examples of the photopolymerizable functional group include both a photopolymerizable functional group in a narrow sense which is directly activated by light irradiation to undergo a photopolymerization reaction, and a photopolymerizable functional group in a broad sense which initiates and promotes a photopolymerization reaction due to action of an active species generated from a photopolymerization initiator when irradiated with light with the photopolymerizable functional group and the photopolymerization initiator coexisting.

The photopolymerizable functional group is one having a photoradical polymerization reactivity such as an ethylenic double bond, one having a photocationic polymerization reactivity and a photoanionic polymerization reactivity such as a cyclic ether group such as an epoxy group, or the like. Among them, the photopolymerizable functional group is preferably an ethylenic double bond such as a (meth)acryloyl group, a vinyl group, and an allyl group, and more preferably a (meth)acryloyl group. In the acrylated amine compound having two photopolymerizable functional groups and two amino groups in the molecule, it is preferable that two photopolymerizable functional groups are both (meth)acryloyl groups and that an amine value is 130 to 142 mgKOH/g. Besides, in the present embodiment, the amine value means an amine value per 1 g of solid content, which is converted to an equivalent of potassium hydroxide after measurement by a potentiometric titration method (for example, COMTITE (AUTO TITRATOR COM-900, BURET B-900, TITSTATIONK-900) manufactured by HIRANUMA Co., Ltd.) using a 0.1N aqueous hydrochloric acid.

The acrylated amine compound having two photopolymerizable functional groups and two amino groups in the molecule is preferably an acrylated amine compound obtained by reacting a bifunctional (meth)acrylate with an amine compound. The bifunctional (meth)acrylate is alkylene glycol di(meth)acrylate such as 1,4-butanediol di(meth)acrylate, 1,6-hexanediol di(meth)acrylate, 1,9-nonanediol di(meth)acrylate, propylene glycol di(meth)acrylate, 1,3-butylene glycol di(meth)acrylate, and neopentyl glycol di(meth)acrylate, di(meth)acrylate of alkylene oxide adduct of bisphenol such as di(meth)acrylate of ethylene oxide adduct of bisphenol A, di(meth)acrylate of ethylene oxide adduct of bisphenol F, di(meth)acrylate of ethylene oxide adduct of bisphenol S, di(meth)acrylate of ethylene oxide adduct of thiobisphenol, and di(meth)acrylate of ethylene oxide adduct of brominated bisphenol A, polyalkylene glycol di(meth)acrylate such as polyethylene glycol di(meth)acrylate and polypropylene glycol di(meth)acrylate, di(meth)acrylate of hydroxypivalic acid neopentyl glycol ester, or the like. Among them, the bifunctional (meth)acrylate is preferably 1,6-hexanediol di(meth)acrylate.

The amine compound is a monofunctional amine compound such as benzylamine, phenethylamine, ethylamine, n-propylamine, isopropylamine, n-butylamine, isobutylamine, n-pentylamine, isopentylamine, n-hexylamine, cyclohexylamine, n-heptylamine, n-octylamine, 2-ethylhexylamine, n-nonylamine, n-decylamine, n-dodecylamine, n-tetradecylamine, n-hexadecylamine, and n-octadecylamine, a polyfunctional amine compound such as diethylenetriamine, triethylenetetramine, tetraethylenepentamine, 1,6-hexamethylenediamine, 1,8-octamethylenediamine, 1,12-dodecamethylenediamine, o-phenylenediamine, p-phenylenediamine, m-phenylenediamine, o-xylylenediamine, p-xylylenediamine, m-xylylenediamine, mentanediamine, bis(4-amino-3-methylcyclohexylnomethane), isophoronediamine, 1,3-diaminocyclohexane, and spiroacetal-based diamine, or the like. Moreover, the amine compound may be a high molecular weight type of polyfunctional amine compound such as polyethyleneimine, polyvinylamine, and polyallylamine.

The above-described acrylated amine compound is preferably a compound obtained by reacting 1,6-hexanediol di(meth)acrylate with an amine compound. Specifically, the acrylated amine compound is CN371 (manufactured by Sartomer), EB7100 (EBECRYL 7100, manufactured by Cytec), Agi008 (manufactured by DSM), or the like.

The content of (A) the component may be 0.1% by mass or more, preferably 0.5% by mass or more, in the ink composition. Moreover, the content of (A) the component may be 13.0% by mass or less, preferably 12.0% by mass or less, in the ink composition. When the content of (A) the component is within the above-described ranges, the ink composition has an excellent curability, and also has excellent storage stability and ejection stability.

### ((B) Nitrogen-containing monomer)

(B) The nitrogen-containing monomer is contained as a polymerization component and comprises vinyl caprolactam.

A content of vinyl caprolactam is preferably 3.5% by mass or more, and more preferably 5.0% by mass or more, in the ink composition. Moreover, the content of vinyl caprolactam is preferably 17.0% by mass or less, and more preferably 15.0% by mass or less, in the ink composition. When the content of (B) the component is within the above-described ranges, the ink composition exhibits excellent curability and abrasion resistance.

Besides, (B) the component may comprise nitrogen-containing monomers other than vinyl caprolactam. Such other nitrogen-containing monomers include acrylamide such as acryloyl morpholine, acrylonitrile, (meth)acrylamide, N-methoxymethylacrylamide, diacetone acrylamide, N,N-dimethylacrylamide, and diethylacrylamide, N-alkylol (C1-5) (meth)acrylamide such as N-vinylcarbazole, N-vinylacetamide, N-vinylpyrrolidone, N,N-dimethyl(meth)acrylam ide, N,N-diethyl(meth)acrylam ide, hydroxymethyl(meth)acryldiamide, di(2-hydroxyethyl)(meth)acrylamide, di(3-hydroxypropyl)(meth)acrylamide, and di(4-hydroxybutyl)(meth)acrylamide, 1 to 3 molar adducts of ethylene oxide or propylene oxide, N-vinyl caprolactam, vinylmethyloxazolidinone, (meth)acryloylpyrrolidine, and (meth)acryloylpiperidine of these N-alkylol (C1-5) (meth)acrylamide, and the like.

### ((C) Aromatic ring-containing monomer)

(C) The aromatic ring-containing monomer is contained as a polymerization component and comprises benzyl acrylate and phenoxyethyl acrylate. When it comprises both benzyl acrylate and phenoxyethyl acrylate, a cured coating film to be obtained is more excellent in waterproof property.

A content of (C) the component may be 35.0% by mass or more, preferably 40.0% by mass or more, in the ink composition. Moreover, the content of (C) the component may be 75.0% by mass or less, preferably 70.0% by mass or less, in the ink composition. When the content of (C) the component is within the above-described ranges, the ink composition can impart waterproof property to the coating film.

Besides, (C) the component may comprise aromatic ring-containing monomers other than benzyl acrylate and phenoxyethyl acrylate. Such other aromatic ring-containing monomers include phenoxydialkylene glycol (meth)acrylate such as phenyl (meth)acrylate, benzyl methacrylate, phenoxyethyl methacrylate, phenoxypropyl (meth)acrylate, phenoxydiethylene glycol (meth)acrylate, and phenoxydipropylene glycol (meth)acrylate, phenoxypolyethylene glycol (meth)acrylate, phenoxypolyethylene glycol-polypropylene glycol-(meth)acrylate, and the like.

### ((D) Polyfunctional monomer)

(D) The polyfunctional monomer is contained as a polymerization component and comprises at least one of propoxylated neopentyl glycol diacrylate, dipropylene glycol diacrylate, or 1,6-hexanediol diacrylate.

A content of (D) the component may be 2.0% by mass or more, preferably 2.5% by mass or more, in the ink composition. Moreover, the content of (D) the component may be 16.0% by mass or less, preferably 15.0% by mass or less, in the ink composition. When the content of (D) the component is within the above-described ranges, the ink composition can achieve both coating film resistance and flexibility.

Besides, (D) the component may comprise other polyfunctional monomers besides at least one of propoxylated neopentyl glycol diacrylate, dipropylene glycol diacrylate, or 1,6-hexanediol diacrylate. Such other polyfunctional monomers include ethoxylated trimethylolpropane triacrylate, trimethylolpropane tri(meth)acrylate, vinyloxyethoxyethyl (meth)acrylate, EO (10 or 20 molar) modified bisphenol A diacrylate, polyethylene glycol (400) di(meth)acrylate, polyethylene glycol (600) diacrylate, ethoxylated (30) bisphenol A diacrylate, alkoxylated neopentyl glycol diacrylate, triethylene glycol dimethacrylate, tetraethylene glycol dimethacrylate, polyethylene glycol (600) dimethacrylate, ethylene glycol di(meth)acrylate, propylene glycol di(meth)acrylate, butanediol di(meth)acrylate, hexanediol di(meth)acrylate, dipropylene glycol di(meth)acrylate, triethylene glycol di(meth)acrylate, tripropylene glycol di(meth)acrylate, 1,9-nonanediol di(meth)acrylate, neopentyl glycol di(meth)acrylate, dimethylol-tricyclodecane di(meth)acrylate, hydroxypivalic acid neopentyl glycol di(meth)acrylate, polytetramethylene glycol diacrylate, pentaerythritol tri(meth)acrylate, pentaerythritol tetra(meth)acrylate and an ethylene oxide modified product thereof, dipentaerythritol penta(meth)acrylate and an ethylene oxide modified product thereof, dipentaerythritol hexa(meth)acrylate and an ethylene oxide modified product thereof, urethane (meth)acrylate, epoxy (meth)acrylate, polyester (meth)acrylate, pentaerythritol ethoxytetraacrylate, caprolactam modified dipentaerythritol hexaacrylate, ethoxylated bisphenol A diacrylate, alkoxylated tetrahydrofurfuryl acrylate, and the like.

### (Hydroxy group-containing resin)

The ink composition of the present embodiment comprises a hydroxyl group-containing resin as a resin component. The hydroxyl group-containing resin includes a ketone resin having a hydroxyl group. The ketone resin having a hydroxyl group is not particularly limited. By way of an example, the ketone resin having a hydroxyl group is a ketone resin having a hydroxyl group obtained by hydrogenating a ketone resin obtained by reacting a ketone group-containing compound that is an aromatic ketone compound such as acetophenone or an alicyclic ketone compound such as cyclohexanone and trimethylcyclohexanone with an aldehyde compound such as formaldehyde, an urethane-modified ketone resin containing a hydroxyl group obtained by reacting a ketone resin having a substituent that can react with an isocyanate compound with a polyisocyanate compound such as isophorone diisocyanate, or the like. These ketone resins having hydroxyl groups are commercially available as those such as VariPlus SK and VariPlus 1201 TF manufactured by Evonik Tego Chemie GmbH.

A content of the hydroxyl group-containing resin is preferably 1.5% by mass or more, and more preferably 2.0% by mass or more, in the ink composition. Moreover, the content of the hydroxyl group-containing resin is preferably 16.0% by mass or less, and more preferably 15.0% by mass or less, in the ink composition. When the content of the hydroxyl group-containing resin is within the above-described ranges, the ink composition can reduce surface tackiness of a coating film while imparting adhesiveness to a base material.

### (Photopolymerization initiator)

The ink composition of the present embodiment comprises a photopolymerization initiator.

The photopolymerization initiator is not particularly limited. By way of an example, the photopolymerization initiator is benzophenone, diethylthioxanthone, 2-methyl-1-(4-methylthio)phenyl-2-morpholinopropan-1 - one, 4-benzoyl-4'-methyldiphenylsulfide, 1-chloro-4-propoxythioxanthone, isopropylthioxanthone, 2-hydroxy-2-methyl-1-phenylpropan-1-one, 1-hydroxycyclohexyl phenyl ketone, bis-2,6-dimethoxybenzoyl-2,4,4-trimethylpentylphosphine oxide, 1-[4-(2-hydroxyethoxy)-phenyl]-2-hydroxy-2-methyl-1-propane-1-one, 2,2-dimethyl-2-hydroxyacetophenone, 2,2-dimethoxy-2-phenylacetophenone, 2,4,6-trimethylbenzyl-diphenylphosphine oxide, 2-benzyl-2-dimethylamino-1-(morpholinophenyl)-butane-1-one, or the like. Such photopolymerization initiators are commercially available, and can be obtained, for example, under trade names of Irgacure 907, Irgacure 369, Irgacure 184, Irgacure 379, Irgacure 819, TPO, etc. from BASF, and under trade names of DETX, etc. from Lamberti. The photopolymerization initiator may be used in combination.

A content of the photopolymerization initiator is not particularly limited. By way of an example, when ultraviolet rays (UV) or ultraviolet rays (light emitting diodes (LEDs)) are used as light sources, the content of the photopolymerization initiator is preferably 3% by mass or more, and more preferably 4% by mass or more, in the ink composition. Moreover, the content of the photopolymerization initiator is preferably 15% by mass or less, and more preferably 10% by mass or less, in the ink composition. When the content of the photopolymerization initiator is within the above-described ranges, the ink composition may have sufficient curability and internal curability, and low cost.

### (Sensitizer)

The ink composition of the present embodiment preferably comprises a sensitizer. When the ink composition comprises a sensitizer, for example, it can promote curability against ultraviolet rays using a light emitting diode (LED) as a light source and has light absorption characteristics mainly in a wavelength range of ultraviolet rays of 400 nm or more, which makes it easy for expressing a sensitizing function of a curing reaction by light having a wavelength in that range. Besides, "expressing a sensitizing function of a curing reaction by light having a wavelength of 400 nm or more" described above means having light absorption characteristics in a wavelength range of 400 nm or more. By using such a sensitizer, the ink composition of the present embodiment can be promoted in LED curability.

The sensitizer is preferably an anthracene-based sensitizer, a thioxanthone-based sensitizer, or the like, and more preferably a thioxanthone-based sensitizer. A photosensitizer may be used in combination. Specifically, the photosensitizer is an anthracene-based sensitizer such as 9,10-dibutoxyanthracene, 9,10-diethoxyanthracene, 9,10-dipropoxyanthracene, and 9,10-bis(2-ethylhexyloxy)anthracene, a thioxanthone-based sensitizer such as 2,4-diethylthioxanthone, 2-isopropylthioxanthone, and 4-isopropylthioxanthone, or the like. Representative examples of commercially available products include DBA and DEA (manufactured by KAWASAKI KASEI CHEMICALS LTD.) as anthracene-based sensitizers, DETX and ITX (manufactured by Lambson Ltd.) as thioxanthone-based sensitizers, and the like.

When the ink composition comprises a sensitizer, a content of the sensitizer is preferably greater than 0% and 3.5% by mass or less in the ink composition. When the content of the sensitizer is within the above-described range, an effect of compounding the sensitizer in the ink composition is easily improved.

### (Colorant)

The ink composition of the present embodiment preferably comprises a colorant. When the ink composition comprises a colorant, it can produce an ink composition of each color.

The colorant is not particularly limited. By way of an example, as colorants, conventionally used pigments and dyes can be used without particular limitation, and pigments such as organic pigments and inorganic pigments are preferable. The colorant may be used in combination.

The organic pigments are dye lake pigments, azo-based, benzoimidazolone-based, phthalocyanine-based, quinacridone-based, anthraquinone-based, dioxazine-based, indigo-based, thioindigo-based, perylene-based, perinone-based, diketo-pyrrolo-pyrrole-based, isoindolinone-based, nitro-based, nitroso-based, anthraquinone-based, flavanthrone-based, quinophthalone-based, pyranthrone-based, indanthrone-based pigments, or the like.

The inorganic pigments are colored pigments such as titanium oxide, red oxide, antimony red, cadmium yellow, cobalt blue, ultramarine blue, navy blue, iron black, chrome oxide green, carbon black, and graphite (including achromatic color pigments such as white and black), extender pigments such as calcium carbonate, kaolin, clay, barium sulfate, aluminum hydroxide, and talc, or the like.

Specific examples of representative pigments for each hue of the ink composition of the present embodiment are as follows. A yellow pigment is C. I. Pigment Yellow 1, 2, 3, 12, 13, 14, 16, 17, 42, 73, 74, 75, 81, 83, 87, 93, 95, 97, 98, 108, 109, 114, 120, 128, 129, 138, 139, 150, 151, 155, 166, 180, 184, 185, 213, or the like, preferably C. I. Pigment Yellow 150, 155, 180, 213, or the like. A content of the yellow pigment is not particularly limited. By way of an example, the content of the yellow pigment is preferably 1.0% by mass or more, and more preferably 1.5% by mass or more, in the ink composition. Moreover, the content of the yellow pigment is preferably 4.0% by mass or less, and more preferably 3.0% by mass or less, in the ink composition.

A magenta pigment is C. I. Pigment Red 5, 7, 12, 22, 38, 48:1, 48:2, 48:4, 49:1, 53:1, 57, 57:1, 63:1, 101, 102, 112, 122, 123, 144, 146, 149, 168, 177, 178, 179, 180, 184, 185, 190, 202, 209, 224, 242, 254, 255, 270, C. I. Pigment Violet 19, or the like, preferably C. I. Pigment Red 122, 202, Pigment Violet 19, or the like. A content of the magenta pigment is not particularly limited. By way of an example, the content of the magenta pigment is preferably 1.0% by mass or more, and more preferably 2.0% by mass or more, in the ink composition. Moreover, the content of the magenta pigment is preferably 5.0% by mass or less, and more preferably 4.0% by mass or less, in the ink composition.

A cyan pigment is C. I. Pigment Blue 1, 2, 3, 15, 15:1, 15:2, 15:3, 15:4, 15:6, 16, 18, 22, 27, 29, 60, or the like, preferably C. I. Pigment Blue 15:4 or the like. A content of the cyan pigment is not particularly limited. By way of an example, the content of the cyan pigment is preferably 1.0% by mass or more, and more preferably 2.0% by mass or more, in the ink composition. Moreover, the content of the cyan pigment is preferably 5.0% by mass or less, and more preferably 4.0% by mass or less, in the ink composition.

A black pigment is carbon black (C. I. Pigment Black 7) or the like. A content of the black pigment is not particularly limited. By way of an example, the content of the black pigment is preferably 0.5% by mass or more, and more preferably 1.0% by mass or more, in the ink composition. Moreover, the content of the black pigment is preferably 3.5% by mass or less, and more preferably 2.5% by mass or less, in the ink composition.

A white pigment is titanium oxide, aluminum oxide, or the like, preferably titanium oxide surface-treated with various materials such as alumina and silica, or the like. A content of the white pigment is not particularly limited. By way of an example, the content of the white pigment is preferably 10% by mass or more, and more preferably 12% by mass or more, in the ink composition. Moreover, the content of the white pigment is preferably 17% by mass or less, and more preferably 15% by mass or less, in the ink composition.

A content of the colorant is preferably 1% by mass or more in the ink composition. Moreover, the content of the colorant is preferably 20% by mass or less in the ink composition. When the content of the colorant is within the above-described ranges, the ink composition has an appropriate image quality of a printed matter to be obtained and is excellent in viscosity property.

### (Pigment dispersant)

A pigment dispersant is appropriately compounded in order to improve dispersibility of the pigment and storage stability of the ink composition.

The pigment dispersant is not particularly limited. By way of an example, the pigment dispersant is a carbodiimide-based dispersant, a polyester amine-based dispersant, a fatty acid amine-based dispersant, a modified polyacrylate-based dispersant, a modified polyurethane-based dispersant, and a multichain polymer nonionic dispersant, a polymer ion activator, or the like. The pigment dispersant may be used in combination.

When the pigment dispersant is compounded, a content of the pigment dispersant is not particularly limited. The content of the pigment dispersant is preferably 1 to 200% by mass based on 100% by mass of the pigment. When the content of the pigment dispersant is within the above-described range, an ink composition to be obtained has an excellent storage stability.

### (Other components)

The ink composition of the present embodiment may contain, as other components, various additives such as a surfactant, an organic solvent, a polymerization inhibitor, a preservability improving agent, an ultraviolet absorber, an antioxidant, an anti-foaming agent, an antifungal agent, an antirust agent, a thickener, a moisturizing agent, and a pH adjusting agent.

### (Surfactant (leveling agent))

The surfactant (leveling agent) is not particularly limited. By way of an example, the surfactant is a nonionic surfactant, a cationic surfactant, an anionic surfactant, a betaine surfactant, or the like. More specifically, the surfactant is a silicone-based surfactant such as a polyether-modified silicone oil, a polyester-modified polydimethylsiloxane, a polyester-modified methylalkyl polysiloxane, a fluorine-based surfactant, an acetylene-based surfactant, or the like.

The silicone-based surfactant is BYK-307, BYK-315N, BYK-331, BYK-333, BYK-347, BYK-348, BYK-349, BYK-345, BYK-377, BYK-378, BYK-3455 (manufactured by BYK-Chemie), or the like.

The fluorine-based surfactant is F-410, F-444, F-553 (manufactured by DIC CORPORATION), FS-65, FS-34, FS-35, FS-31, FS-30 (manufactured by DuPont), or the like.

The acetylene-based surfactant is DYNOL 607, DYNOL 609, OLFINE E1004, OLFINE E1010, OLFINE E1020, OLFINE PD-001, OLFINE PD-002W, OLFINE PD-004, OLFINE PD-005, OLFINE EXP.4001, OLFINE EXP.4200, OLFINE EXP.4123, OLFINE EXP.4300 (manufactured by Nissin Chemical Industry Co., Ltd.), SURFYNOL 104E, SURFYNOL 104H, SURFYNOL 104A, SURFYNOL 104BC, SURFYNOL 104DPM, SURFYNOL 104PA, SURFYNOL 104PG-50, SURFYNOL 420, SURFYNOL 440, SURFYNOL 465 (manufactured by Evonik Industries AG), or the like.

When the surfactant is compounded, a content of the surfactant is not particularly limited. By way of an example, the content of the surfactant is preferably 0.005% by mass or more, and more preferably 0.01% by mass or more, from the viewpoint of improving ejection stability of the ink composition from an inkjet head. Moreover, the content of the surfactant is preferably 1.5% by mass or less, and more preferably 1% by mass or less.

### (Solvent)

A solvent may be compounded in the ink composition. The solvent is an ester-based organic solvent, an ether-based organic solvent, an ether ester-based organic solvent, a ketone-based organic solvent, an aromatic hydrocarbon solvent, a nitrogen-containing organic solvent, or the like.

When the solvent is compounded, a content of the solvent is not particularly limited. By way of an example, the content of the solvent is preferably 5% by mass or less, and more preferably 2% by mass or less, in the ink composition.

### (Polymerization inhibitor)

The polymerization inhibitor is not particularly limited. By way of an example, the polymerization inhibitor is a N-CH₃ type, N-H type, N-OR type hindered amine, etc., or a phenol-based, amine-based, sulfur-based, phosphorus-based polymerization inhibitor, etc.

### (Preservability improving agent)

The preservability improving agent is of N-CH₃ type, NH type, N-OR type, or the like.

### (Ultraviolet absorber)

The ultraviolet absorber is a benzophenone-based ultraviolet absorber, a benzotriazole-based ultraviolet absorber, a salicylate-based ultraviolet absorber, a hydroxyphenyltriazine-based ultraviolet absorber, a cyanoacrylate-based ultraviolet absorber, a nickel complex salt-based ultraviolet absorber, or the like.

### (Antioxidant)

The antioxidant is a phenol-based antioxidant, an amine-based antioxidant, a sulfur-based antioxidant, a phosphorus-based antioxidant, or the like.

### (Anti-foaming agent)

The anti-foaming agent is a silicone-based anti-foaming agent, a Pluronic (Registered Trademark)-based anti-foaming agent, or the like.

Returning back to the general description of the ink composition, the ink composition of the present embodiment preferably has a viscosity of 30 mPa·s or less, and more preferably 20 mPa·s or less, at 25°C. A viscosity modifier or the like is compounded in the ink composition as necessary. Besides, in the present embodiment, the viscosity can be measured at 25°C using an E-type viscometer (RE100L-type viscometer, manufactured by Toki Sangyo Co., Ltd.).

The obtained ink composition can be printed on an appropriate base material using an inkjet printer to form an inkjet image. The base material is not particularly limited. By way of an example, the base material includes plastic base materials such as soft polyvinyl chloride, hard polyvinyl chloride, polystyrene, styrofoam, PMMA, polypropylene, polyethylene, PET, and polycarbonate, mixtures or modified products thereof, paper base materials such as high-quality paper, art paper, coated paper, and cast coated paper, metal base materials such as glass and stainless steel, and the like. The ink composition of the present embodiment is appropriate as it exhibits an excellent adhesiveness particularly when imparted to various plastic base materials, among them, because it has crosslink densities that are not too high and can form a coating film having an excellent bendability.

As described above, the ink composition of the present embodiment has an excellent adhesiveness to a plastic base material and can form a coating film having flexibility, water resistance, and waterproof property.

One embodiment of the present invention has been described above. The present invention is not particularly limited to the above-described embodiment. Besides, the above-described embodiment mainly describes an invention having the following configurations.
(1) The ink composition for ultraviolet-curable inkjet printing comprising polymerization components, a resin component, and a photopolymerization initiator, wherein the polymerization components include (A) a polyfunctional amine-modified oligomer, (B) a nitrogen-containing monomer, (C) an aromatic ring-containing monomer, and (D) a polyfunctional monomer, wherein the resin component includes a hydroxyl group-containing resin, wherein (A) the polyfunctional amine-modified oligomer comprises an acrylated amine compound having two photopolymerizable functional groups and two amino groups in a molecule, wherein (B) the nitrogen-containing monomer comprises vinyl caprolactam, wherein (C) the aromatic ring-containing monomer comprises benzyl acrylate and phenoxyethyl acrylate, wherein (D) the polyfunctional monomer comprises at least one of propoxylated neopentyl glycol diacrylate, dipropylene glycol diacrylate, or 1,6-hexanediol diacrylate, wherein a content of (A) the polyfunctional amine-modified oligomer is 0.1 to 13.0% by mass, wherein a content of (C) the aromatic ring-containing monomer is 35.0 to 75.0% by mass, wherein a content of (D) the polyfunctional monomer is 2.0 to 16.0% by mass, and wherein the hydroxyl group-containing resin includes a ketone resin having a hydroxyl group.
   According to such a configuration, the ink composition for ultraviolet-curable inkjet printing has an excellent adhesiveness to a plastic base material and can form a coating film having flexibility, water resistance, and waterproof property.
(2) The ink composition for ultraviolet-curable inkjet printing of (1), wherein a content of the vinyl caprolactam is 3.5 to 17.0% by mass, and wherein a content of the hydroxyl group-containing resin is 1.5 to 16.0% by mass.

According to such a configuration, the ink composition for ultraviolet-curable inkjet printing has an excellent curability and reduces surface tackiness of a coating film.

### EXAMPLE

Hereinafter, the present invention will be described in more detail with reference to Examples. The present invention is not limited to these Examples. Besides, unless otherwise specified, "%" means "% by mass", and "part" means "part by mass".

Raw materials used are shown below.

### <Colorant>

PB15:4
PR122
PY150
PBk7
PW6

### <Pigment dispersant>

Dispersant 1: Solspers 6000, manufactured by Lubrizol Japan Limited
Dispersant 2: BYKJET9151, manufactured by BYK-Chemie
Dispersant 3: Solspers 36000, manufactured by Lubrizol Japan Limited
Dispersant 4: PB821, manufactured by Ajinomoto Fine-Techno Co., Inc.

### <(A) Polyfunctional amine-modified oligomer>

Amine-modified oligomer: CN371NS, manufactured by Sartomer, which is an acrylated amine compound having two photopolymerizable functional groups and two amino groups in a molecule

### <(C) Aromatic ring-containing monomer and other monomers>

Benzyl acrylate: Miramer M1182HP, manufactured by Miwon Specialty Chemical Co., Ltd.
Phenoxyethyl acrylate: Miramer M140, manufactured by Miwon Specialty Chemical Co., Ltd.
Isobornyl acrylate: IBXA, manufactured by Osaka Organic Chemical Industry Co., Ltd.
t-butylcyclohexyl acrylate: SR217, manufactured by Sartomer
Ethyl carbitol acrylate: Viscoat #190, manufactured by Osaka
Organic Chemical Industry Co., Ltd.

### <(D) Polyfunctional monomer>

(PO)NPGDA (propoxylated neopentyl glycol diacrylate): Miramer M216, manufactured by Miwon Specialty Chemical Co., Ltd.
Dipropylene glycol diacrylate: Agisyn 2833, manufactured by DSM-AGI Corporation
1,6-hexanediol diacrylate: SR238NS, manufactured by Sartomer

### <(B) Nitrogen-containing monomer>

Vinyl caprolactam: VCAP, manufactured by ISP Japan Ltd.

### <Photopolymerization initiator>

TPO: 2,4,6-trimethylbenzoyl-diphenyl-phosphine oxide, manufactured by Lambson Ltd.

### <Sensitizer>

DETX: 2,4-diethylthioxanthone, manufactured by Lambson Ltd.

### <Hydroxy group-containing resin>

Hydroxyl group-containing resin: VariPlus SK, manufactured by Evonik Tego Chemie GmbH, which is a ketone resin having a hydroxyl group, which is obtained by hydrogenating a ketone resin obtained by reacting acetophenone with formaldehyde

### <Polymerization inhibitor>

MEHQ: Hydroquinone monomethyl ether
UV22: Quinone-based polymerization inhibitor, manufactured by Kromachem Ltd.

### <Leveling agent>

BYK-377: Silicone-based surface treatment agent, with a solid content of 100%, manufactured by BYK Japan KK

### <Base material>

Acryl: ACRYLITE L, manufactured by Mitsubishi Rayon Co., Ltd., which is excellent in cast and processability
PVC: IJ180, manufactured by 3M, which is used for outdoor and indoor sign graphics
Polycarbonate: NF-2000 white, manufactured by MITSUBISHI GAS CHEMICAL COMPANY, INC., which is excellent in processability
PS: Polystyrene sheet, manufactured by Acrysunday Co., Ltd., which is lightweight and has a low water absorption rate

### (Ink composition for ultraviolet-curable inkjet printing)

A mixture obtained by compounding each of raw materials other than a photopolymerization initiator, a sensitizer, a polymerization inhibitor, and a leveling agent so as to have compounding formulations (% by mass) shown in Table 1 was dispersed using an Eiger mill (using zirconia beads having a diameter of 0.5 mm as a medium) to obtain a conc base. Using the obtained conc base, the photopolymerization initiator, the sensitizer, the polymerization inhibitor, and the leveling agent were compounded so as to have compounding formulations (% by mass) shown in Table 1 to obtain ink compositions for ultraviolet-curable inkjet printing in Examples 1 to 15 and Comparative examples in 1 to 8.

### <Evaluation on ink composition for ultraviolet-curable inkjet printing and printed matter>

Using the ink compositions for ultraviolet-curable inkjet printing in Examples 1 to 15 and Comparative examples 1 to 8, specific gravity, viscosity, surface tension, adhesiveness, flexibility, pencil hardness, abrasion resistance, water resistance, waterproof property, and LED curability of the ink compositions were evaluated according to the following evaluation methods and evaluation criteria. The results are shown in Table 1.

**Table 1**

| | | Example | | | | | | | | | |
|---|---|---|---|---|---|---|---|---|---|---|---|
| | | 1 | 2 | 3 | 4 | 5 | 6 | 7 | 8 | 9 | 10 |
| P.B.15:4 | | 2.40% | 2.40% | 2.40% | 2.40% | 2.40% | 2.40% | 2.40% | - | - | - |
| P.R.122 | | - | - | - | - | - | - | - | 2.80% | - | - |
| P.Y.150 | | - | - | - | - | - | - | - | - | 2.00% | - |
| P.Bk.7 | | - | - | - | - | - | - | - | - | - | 1.60% |
| P.W.6 | | - | - | - | - | - | - | - | - | - | - |
| Dispersant 1 | | 0.96% | 0.96% | 0.96% | 0.96% | 0.96% | 0.96% | 0.96% | - | - | 0.64% |
| Dispersant 2 | | - | - | - | - | - | - | - | 1.20% | - | - |
| Dispersant 3 | | - | - | - | - | - | - | - | - | 0.80% | - |
| Dispersant 4 | | - | - | - | - | - | - | - | - | - | - |
| Amine-modified oligomer | | 4.50% | 4.50% | 4.50% | 4.50% | 4.50% | 0.50% | 12.00% | 1.00% | 4.00% | 4.50% |
| Benzyl acrylate | | 31.94% | 43.84% | 18.84% | 31.94% | 31.94% | 31.94% | 31.94% | 32.01% | 31.90% | 32.76% |
| Phenoxyethyl acrylate | | 21.90% | 10.00% | 35.00% | 14.40% | 26.90% | 25.90% | 14.40% | 21.70% | 22.20% | 18.20% |
| (PO)NPGDA | | 7.50% | 7.50% | 7.50% | 15.00% | 2.50% | 7.50% | 7.50% | 12.50% | 7.50% | 7.50% |
| Dipropylene glycol diacrylate | | - | - | - | - | - | - | - | - | - | - |
| 1,6-hexanediol diacrylate | | - | - | - | - | - | - | - | - | - | - |
| Isobornyl acrylate | | - | - | - | - | - | - | - | - | - | - |
| t-butylcyclohexyl acrylate | | - | - | - | - | - | - | - | - | - | - |
| Ethyl carbitol acrylate | | - | - | - | - | - | - | - | - | - | - |
| Vinyl caprolactam | | 10.00% | 10.00% | 10.00% | 10.00% | 10.00% | 10.00% | 10.00% | 10.00% | 10.00% | 10.00% |
| TPO (polymerization initiator) | | 8.00% | 8.00% | 8.00% | 8.00% | 8.00% | 8.00% | 8.00% | 6.00% | 7.50% | 8.00% |
| DTEX (sensitizer) | | 0.50% | 0.50% | 0.50% | 0.50% | 0.50% | 0.50% | 0.50% | 1.50% | 1.80% | 3.00% |
| Hydroxyl group-containing resin | | 10.00% | 10.00% | 10.00% | 10.00% | 10.00% | 10.00% | 10.00% | 9.00% | 10.00% | 10.00% |
| MEHQ (polymerization inhibitor) | | 1.90% | 1.90% | 1.90% | 1.90% | 1.90% | 1.90% | 1.90% | 1.90% | 1.90% | 3.00% |
| UV22 (polymerization inhibitor) | | 0.20% | 0.20% | 0.20% | 0.20% | 0.20% | 0.20% | 0.20% | 0.20% | 0.20% | 0.60% |
| BYK-377 (leveling agent) | | 0.20% | 0.20% | 0.20% | 0.20% | 0.20% | 0.20% | 0.20% | 0.20% | 0.20% | 0.20% |
| Total | | 100.00 % | 100.00 % | 100.00 % | 100.00 % | 100.00 % | 100.00 % | 100.00 % | 100.01 % | 100.00 % | 100.00 % |
| Specific gravity | | 1.06 | 1.06 | 1.06 | 1.06 | 1.06 | 1.06 | 1.06 | 1.08 | 1.09 | 1.09 |
| Viscosity | cps@45°C | 10.6 | 8.8 | 13.8 | 12.9 | 13.5 | 9.4 | 14.2 | 10.4 | 10.3 | 10.3 |
| Surface tension | mN/m | 22.8 | 22.8 | 22.8 | 22.8 | 22.8 | 22.8 | 22.8 | 23.5 | 22.9 | 23.0 |
| Adhesiveness | Acryl | 100/100 | 100/100 | 100/100 | 100/100 | 100/100 | 100/100 | 100/100 | 100/100 | 100/100 | 100/100 |
| | PVC | 100/100 | 100/100 | 100/100 | 100/100 | 100/100 | 100/100 | 100/100 | 100/100 | 100/100 | 100/100 |
| | Polycarbonate | 100/100 | 100/100 | 100/100 | 100/100 | 100/100 | 100/100 | 100/100 | 100/100 | 100/100 | 100/100 |
| | PS | 100/100 | 100/100 | 100/100 | 100/100 | 100/100 | 100/100 | 100/100 | 100/100 | 100/100 | 100/100 |
| Flexibility | PVC | ○ | ○ | ○ | ○ | ○ | ○ | ○ | ○ | ○ | ○ |
| Resistance | Pencil hardness | 2H | 2H | 2H | 2H | 2H | 2H | 2H | 2H | 2H | 2H |
| | Abrasion resistance | ○ | ○ | ○ | ○ | ○ | ○ | ○ | ○ | ○ | ○ |
| | Water resistance | ○ | ○ | ○ | ○ | ○ | ○ | ○ | ○ | ○ | ○ |
| | Waterproof property | ○ | ○ | ○ | ○ | ○ | ○ | ○ | ○ | ○ | ○ |
| LED curability | | ○ | ○ | ○ | ○ | ○ | ○ | ○ | ○ | ○ | ○ |

| | Example | | | | |
|---|---|---|---|---|---|
| | 11 | 12 | 13 | 14 | 15 |
| P.B.15:4 | - | 2.40% | 2.40% | 2.40% | 2.40% |
| P.R.122 | - | - | - | - | - |
| P.Y.150 | - | - | - | - | - |
| P.Bk.7 | - | - | - | - | - |
| P.W.6 | 14.00% | - | - | - | - |
| Dispersant 1 | - | 0.96% | 0.96% | 0.96% | 0.96% |
| Dispersant 2 | - | - | - | - | - |
| Dispersant 3 | - | - | - | - | - |
| Dispersant 4 | 1.40% | - | - | - | - |
| Amine-modified oligomer | 1.00% | 6.00% | 2.30% | 4.50% | 4.50% |
| Benzyl acrylate | 31.60% | 23.73% | 41.53% | 31.94% | 31.94% |
| Phenoxyethyl acrylate | 14.30% | 16.27% | 28.47% | 21.90% | 21.90% |
| (PO)NPGDA | 7.50% | 9.84% | 6.54% | - | - |
| Dipropylene glycol diacrylate | - | - | - | 7.50% | - |
| 1,6-hexanediol diacrylate | - | - | - | - | 7.50% |
| Isobornyl acrylate | - | - | - | - | - |
| t-butylcyclohexyl acrylate | - | - | - | - | - |
| Ethyl carbitol acrylate | - | - | - | - | - |
| Vinyl caprolactam | 9.00% | 15.00% | 5.00% | 10.00% | 10.00% |
| TPO (polymerization initiator) | 12.00% | 8.00% | 8.00% | 8.00% | 8.00% |
| DTEX (sensitizer) | - | 0.50% | 0.50% | 0.50% | 0.50% |
| Hydroxyl group-containing resin | 8.00% | 15.00% | 2.00% | 10.00% | 10.00% |
| MEHQ (polymerization inhibitor) | 1.00% | 1.90% | 1.90% | 1.90% | 1.90% |

| | | Example | | | | |
|---|---|---|---|---|---|---|
| | | 11 | 12 | 13 | 14 | 15 |
| UV22 (polymerization inhibitor) | | - | 0.20% | 0.20% | 0.20% | 0.20% |
| BYK-377 (leveling agent) | | 0.20% | 0.20% | 0.20% | 0.20% | 0.20% |
| Total | | 100.00% | 100.00% | 100.00% | 100.00% | 100.00% |
| Specific gravity | | 1.19 | 1.06 | 1.06 | 1.06 | 1.06 |
| Viscosity | cps@45°C | 10.4 | 12.8 | 9.7 | 10.8 | 9.9 |
| Surface tension | mN/m | 22.9 | 22.8 | 22.8 | 22.9 | 23.0 |
| Adhesiveness | Acryl | 100/100 | 100/100 | 100/100 | 100/100 | 100/100 |
| | PVC | 100/100 | 100/100 | 100/100 | 100/100 | 100/100 |
| | Polycarbonate | 100/100 | 100/100 | 100/100 | 100/100 | 100/100 |
| | PS | 100/100 | 100/100 | 100/100 | 100/100 | 100/100 |
| Flexibility | PVC | ○ | ○ | ○ | ○ | ○ |
| Resistance | Pencil hardness | 3H | 3H | 3H | 3H | 3H |
| | Abrasion resistance | ○ | ○ | ○ | ○ | ○ |
| | Water resistance | ○ | ○ | ○ | ○ | ○ |
| | Waterproof property | ○ | ○ | ○ | ○ | ○ |
| LED curability | | ○ | ○ | ○ | ○ | ○ |

| | Comparative example | | | | | | | | |
|---|---|---|---|---|---|---|---|---|---|
| | 1 | 2 | 3 | 4 | 5 | 6 | 7 | 8 | |
| P.B.15:4 | 2.40% | 2.40% | 2.40% | 2.40% | 2.40% | 2.40% | 2.40% | 2.40% | |
| P.R.122 | - | - | - | - | - | - | - | - | |
| P.Y.150 | - | - | - | - | - | - | - | - | |
| P.Bk.7 | - | - | - | - | - | - | - | - | |
| P.W.6 | - | - | - | - | - | - | - | - | |
| Dispersant 1 | 0.96% | 0.96% | 0.96% | 0.96% | 0.96% | 0.96% | 0.96% | 0.96% | |
| Dispersant 2 | - | - | - | - | - | - | - | - | |
| Dispersant 3 | - | - | - | - | - | - | - | - | |
| Dispersant 4 | - | - | - | - | - | - | - | - | |
| Amine-modified oligomer | 4.50% | 4.50% | 4.50% | 4.50% | 4.50% | - | 15.00% | 4.50% | |
| Benzyl acrylate | 31.94% | 31.94% | 31.94% | 24.44% | 31.94% | 31.94% | 31.94% | - | |
| Phenoxyethyl acrylate | - | - | - | 18.90% | 28.40% | 26.40% | 11.40% | 21.90% | |
| (PO)NPGDA | 7.50% | 7.50% | 7.50% | 18.00% | 1.00% | 7.50% | 7.50% | 7.50% | |
| Dipropylene glycol diacrylate | - | - | - | - | - | - | - | - | |
| 1,6-hexanediol diacrylate | - | - | - | - | - | - | - | - | |
| Isobornyl acrylate | 21.90% | - | - | - | - | - | - | 31.94% | |
| t-butylcyclohexyl acrylate | - | 21.90% | - | - | - | - | - | - | |
| Ethyl carbitol acrylate | - | - | 21.90% | - | - | - | - | - | |
| Vinyl caprolactam | 10.00% | 10.00% | 10.00% | 10.00% | 10.00% | 10.00% | 10.00% | 10.00% | |
| TPO (polymerization initiator) | 8.00% | 8.00% | 8.00% | 8.00% | 8.00% | 8.00% | 8.00% | 8.00% | |
| DTEX (sensitizer) | 0.50% | 0.50% | 0.50% | 0.50% | 0.50% | 0.50% | 0.50% | 0.50% | |
| Hydroxyl group-containing resin | 10.00% | 10.00% | 10.00% | 10.00% | 10.00% | 10.00% | 10.00% | 10.00% | |
| MEHQ (polymerization inhibitor) | 1.90% | 1.90% | 1.90% | 1.90% | 1.90% | 1.90% | 1.90% | 1.90% | |

| 1 | 2 | 3 | 4 | 5 | 6 | 7 | 8 | | |
|---|---|---|---|---|---|---|---|---|---|
| UV22 (polymerization inhibitor) | | 0.20% | 0.20% | 0.20% | 0.20% | 0.20% | 0.20% | 0.20% | 0.20% |
| BYK-377 (leveling agent) | | 0.20% | 0.20% | 0.20% | 0.20% | 0.20% | 0.20% | 0.20% | 0.20% |
| Total | | 100.00% | 100.00% | 100.00% | 100.00% | 100.00% | 100.00% | 100.00% | 100.00% |
| Specific gravity | | 1.06 | 1.06 | 1.06 | 1.06 | 1.06 | 1.06 | 1.06 | 1.06 |
| Viscosity | cps@45°C | 8.6 | 8.8 | 8.3 | 13.3 | 13.5 | 9.1 | 18.0 | 14.6 |
| Surface tension | mN/m | 24.8 | 22.8 | 22.8 | 22.8 | 22.8 | 22.8 | 22.8 | 23.5 |
| Adhesiveness | Acryl | 100/100 | 100/100 | 100/100 | 50/100 | 100/100 | 100/100 | 100/100 | 100/100 |
| | PVC | 100/100 | 100/100 | 100/100 | 100/100 | 100/100 | 100/100 | 100/100 | 100/100 |
| | Polycarbonate | 100/100 | 100/100 | 100/100 | 100/100 | 100/100 | 100/100 | 100/100 | 100/100 |
| | PS | 100/100 | 100/100 | 100/100 | 100/100 | 100/100 | 100/100 | 100/100 | 100/100 |
| Flexibility | PVC | ○ | ○ | ○ | × | ○ | ○ | × | ○ |
| Resistance | Pencil hardness | 2H | 2H | HB | 3H | 2B | 2H | 2H | 2H |
| | Abrasion resistance | ○ | ○ | ○ | ○ | × | ○ | ○ | ○ |
| | Water resistance | ○ | ○ | × | ○ | ○ | ○ | ○ | ○ |
| | Waterproof property | × | × | × | ○ | × | ○ | ○ | × |
| LED curability | | ○ | ○ | ○ | ○ | ○ | × | ○ | ○ |

### (Viscosity of ink composition for ultraviolet-curable inkjet printing)

Viscosity of the ink composition for ultraviolet-curable inkjet printing was measured under a condition of a temperature at 25°C and a rotor rotation speed of 20 rpm using the E-type viscometer (RE100L-type viscometer, manufactured by Toki Sangyo Co., Ltd.).

### (Specific gravity of ink composition for ultraviolet-curable inkjet printing)

Specific gravity of the ink composition for ultraviolet-curable inkjet printing was measured using a Gay-Lussac type specific gravity bottle (pycnometer).

### (Surface tension)

Surface tension of the ink composition for ultraviolet-curable inkjet printing was measured at a temperature of 25°C using a dynamic wettability tester (WET-6000, manufactured by RHESCA Co., LTD.).

### (Adhesiveness)

Adhesiveness of the ink composition for ultraviolet-curable inkjet printing was evaluated by a cross-cut test. A test piece was created by solid-coating each base material of PVC, coated paper, and PET with an ink composition for active energy ray-curable inkjet, and then curing it by irradiating it with an ultraviolet ray. Evaluation was performed by cross-cutting a cured coating film formed on the base material with a cutter knife into 100 square pieces of cured coating film, putting cellophane tape (Cellulose tape (Registered Trademark), manufactured by NICHIBAN Co., Ltd.) on the cut part and tearing it off, and counting the number of square pieces remained on the base material, which adhered to the cellophane tape without peeling off. 100/100 in Table 1 means that all the pieces remained on the base material without peeling off, indicating that adhesiveness was good.

### (Flexibility)

Evaluation was performed by typing an ink composition for ultraviolet-curable inkjet printing on PVC and bending the printed material by 180°, according to the following evaluation criteria.
∘: Neither ruled line cracks nor fine cracks occurred in the coating film when bent.
△: Fine cracks occurred in the coating film when bent.
×: Ruled line cracks occurred in the coating film when bent.

### (Pencil hardness)

Pencil hardness of the ink composition for ultraviolet-curable inkjet printing was evaluated by a pencil scratching test (pencil hardness) according to JIS K5600-5-4, and the hardness value was described.

### (Abrasion resistance)

An ink composition for ultraviolet-curable inkjet printing was applied to PVC using a #4 bar coater. Next, irradiation was performed twice with a UV-LED light lamp manufactured by Phoseon Technology at a distance of 2 cm between the lamp and the ink-coated surface under an irradiation condition of an irradiation time of 1 second per irradiation (UV integrated light amount per second: 60 mJ/cm²) to form a cured coating film. This cured coating film was rubbed with a bleached cloth with 500 g × 50 times using a Gakushin-Type fastness tester (manufactured by Daiei Kagaku Seiki MFG Co., Ltd.), and a degree of rubbing-off of the cured coating film on PVC at that time was visually observed and evaluated according to the following evaluation criteria.
∘: The cured coating film was not rubbed off even after being rubbed 50 times or more.
△: The cured coating film was rubbed off after being rubbed 10 to 49 times.
×: The cured coating film was rubbed off after being rubbed 1 to 9 times.

### (Water resistance)

The same cured coating film as the cured coating film used in the evaluation of abrasion resistance was rubbed with a bleached cloth permeated with 5 drops of water with 200 g × 50 times using a Gakushin-Type fastness tester (manufactured by Daiei Kagaku Seiki MFG Co., Ltd.), and a degree of rubbing-off of the cured coating film on PVC at that time was visually observed and evaluated according to the following evaluation criteria.
∘: The cured coating film was not rubbed off even after being rubbed 50 times or more.
△: The cured coating film was rubbed off after being rubbed 10 to 49 times.
×: The cured coating film was rubbed off after being rubbed 1 to 9 times.

### (Waterproof property)

An ink composition for ultraviolet-curable inkjet printing was applied to PVC using a #4 bar coater. Next, irradiation was performed twice with a UV-LED light lamp manufactured by Phoseon Technology at a distance of 2 cm between the lamp and the ink-coated surface under an irradiation condition of an irradiation time of 1 second per irradiation (UV integrated light amount per second: 60 mJ/cm²) to form a cured coating film. This cured coating film was immersed in water and left to stand for 24 hours. It was then dried for 2 hours, the above-described test for adhesiveness was conducted, and evaluation was performed according to the following evaluation criteria.
∘: The cured coating film was not rubbed off even after being rubbed 50 times or more.
△: The cured coating film was rubbed off after being rubbed 10 to 49 times.
×: The cured coating film was rubbed off after being rubbed 1 to 9 times.

### (LED curability)

An inkjet recording device and an ink composition for ultraviolet-curable inkjet printing were placed under an atmospheric temperature at 25°C for 24 hours, and each temperature of the inkjet recording device and the ink composition for ultraviolet-curable inkjet printing was set to 25°C. Then, the ink composition for ultraviolet-curable inkjet printing was continuously printed (typed) on a PVC sheet at 25°C and then cured with a UV integrated light amount of 180 mJ/cm² by use of a UV-LED light lamp manufactured by Phoseon Technology at a distance of 2 cm between a lamp and an ink-coated surface. The obtained curable coating film was rubbed with a cotton swab, and curability was evaluated depending on a degree of rubbing-off according to the following evaluation criteria.
∘: The film was not rubbed off.
×: The film was rubbed off.

As shown in Table 1, the ink compositions for ultraviolet-curable inkjet printing in Examples 1 to 15 of the present invention were easy to cure, had an excellent adhesiveness to various plastic base materials, and were able to form a coating film having excellent flexibility and various resistances (pencil hardness, abrasion resistance, water resistance, and waterproof property). On the other hand, the ink compositions for ultraviolet-curable inkjet printing in Comparative examples 1 to 3 and 8, which did not contain both benzyl acrylate and phenoxyethyl acrylate as (C) the aromatic ring-containing monomers, had a poor waterproof property. Moreover, in Comparative examples 4 and 5 in which the content of the polyfunctional monomer in the ink composition was outside the range of the present invention, it was difficult to achieve both flexibility and durability of a coating film. In Comparative examples 6 and 7 in which the content of the amine-modified oligomer in the ink was outside of the range of the present invention, it was difficult to achieve both flexibility and LED curability.

## Claims

1. An ink composition for ultraviolet-curable inkjet printing comprising polymerization components, a resin component, and a photopolymerization initiator,
wherein the polymerization components include (A) a polyfunctional amine-modified oligomer, (B) a nitrogen-containing monomer, (C) an aromatic ring-containing monomer, and (D) a polyfunctional monomer,
wherein the resin component includes a hydroxyl group-containing resin,
wherein (A) the polyfunctional amine-modified oligomer comprises an acrylated amine compound having two photopolymerizable functional groups and two amino groups in a molecule,
wherein (B) the nitrogen-containing monomer comprises vinyl caprolactam,
wherein (C) the aromatic ring-containing monomer comprises benzyl acrylate and phenoxyethyl acrylate,
wherein (D) the polyfunctional monomer comprises at least one of propoxylated neopentyl glycol diacrylate, dipropylene glycol diacrylate, or 1,6-hexanediol diacrylate,
wherein a content of (A) the polyfunctional amine-modified oligomer is 0.1 to 13.0% by mass,
wherein a content of (C) the aromatic ring-containing monomer is 35.0 to 75.0% by mass,
wherein a content of (D) the polyfunctional monomer is 2.0 to 16.0% by mass, and
wherein the hydroxyl group-containing resin includes a ketone resin having a hydroxyl group.

2. The ink composition for ultraviolet-curable inkjet printing of claim 1, wherein a content of the vinyl caprolactam is 3.5 to 17.0% by mass, and
wherein a content of the hydroxyl group-containing resin is 1.5 to 16.0% by mass.
